# EUROPÄISCHE PATENTANMELDUNG

(11) **EP 4 241 921 A1**
(43) Veröffentlichungstag der Anmeldung: **13.09.2023**
(21) Anmeldenummer: 23157558.0
(22) Anmeldetag: 20.02.2023
(51) Int. Cl.: B24B 31/12, B24B 55/03, B24B 31/06, C02F 1/38

(54) **GLEITSCHLEIFANLAGE**

(30) Priorität: 10.03.2022 DE 102022105714
(71) Anmelder: Rösler Holding GmbH, 96231 Bad Staffelstein (DE)
(72) Erfinder: BÖHM, Rüdiger, 96190 Untermerzbach (DE)
(74) Vertreter: Manitz Finsterwald Patent- und Rechtsanwaltspartnerschaft mbB

(57) **Zusammenfassung**

Eine Gleitschleifanlage umfasst ein Grundstell mit einem Arbeitsbehälter, einem Kreislaufbehälter für Prozesswasser und einer Prozesswasserzentrifuge. Mit einer Steuerung ist im Betrieb der Gleitschleifanlage eine Zwangsreinigung des Prozesswassers im geschlossenen Kreislauf durchführbar.

## Beschreibung

Die vorliegende Erfindung betrifft eine mobile Gleitschleifanlage mit einem transportablen Grundgestell und einem Arbeitsbehälter, in dem Werkstücke einem Gleitschliff unterzogen werden können. Derartige mobile Gleitschleifanlagen sind grundsätzlich bekannt. Bei diesen bekannten Gleitschleifanlagen wird zur Aufbereitung des Prozesswassers ein Umpumpbecken eingesetzt. Dieses neigt jedoch schnell zur Verschlammung und bewirkt oft nur eine unzureichende Wasserklärung, was zu einem schlechten Zustand der Werkstücke und zu einem instabilen Bearbeitungsprozess führt.

Es ist deshalb die Aufgabe der vorliegenden Erfindung, eine mobile Gleitschleifanlage der vorstehend beschriebenen Art zu schaffen, die eine erhöhte Standzeit des Prozesswassers in der Gleitschleifanlage aufweist.

Die Lösung dieser Aufgabe erfolgt durch die Merkmale des Anspruchs 1 und insbesondere dadurch, dass die Gleitschleifanlage neben dem transportablen Grundgestell einen Kreislaufbehälter für Prozesswasser und eine Prozesswasserzentrifuge umfasst. Weiterhin ist eine Steuerung vorgesehen, die so ausgebildet und eingerichtet ist, dass im Betrieb der Gleitschleifanlage eine Zwangsreinigung des Prozesswassers im geschlossenen Kreislauf durchgeführt wird.

Erfindungsgemäß ist die mobile Gleitschleifanlage mit einer Prozesswasserzentrifuge vorgesehen, so dass mit Hilfe der Steuerung während des Gleitschliffvorgangs kontinuierlich Prozesswasser aus dem Arbeitsbehälter in den Kreislaufbehälter und in die Prozesswasserzentrifuge geleitet werden kann, in der das Prozesswasser gereinigt wird. Gleichzeitig kann das mittels Zentrifugation gereinigte Prozesswasser in einem geschlossenen Kreislauf wieder in den Arbeitsbehälter zurückgeführt werden.

Die vorstehend beschriebene Gleitschleifanlage kann äußerst kompakt hergestellt werden und benötigt lediglich einen einzigen elektrischen Anschluss. Durch die kontinuierliche Zwangsreinigung des Prozesswassers mit Hilfe der Prozesswasserzentrifuge kann das Prozesswasser im geschlossenen Kreislauf geführt und gereinigt werden, so dass die Anlage über einen langen Zeitraum betrieben werden kann, ohne dass Prozesswasser gewechselt werden muss.

Vorteilhafte Ausführungsformen der Erfindung sind in der Beschreibung, der Zeichnung sowie den Unteransprüchen beschrieben.

Nach einer ersten vorteilhaften Ausführungsform kann der Kreislaufbehälter einen Reinwassertank und einen Schmutzwassertank aufweisen. Hierdurch kann einerseits aus dem Arbeitsbehälter stammendes Schmutzwasser in dem Kreislaufbehälter zwischengepuffert werden. Weiterhin kann auch gereinigtes Prozesswasser, das von der Prozesswasserzentrifuge ausgegeben wird, in dem Reinwasserbehälter gepuffert werden.

Nach einer weiteren vorteilhaften Ausführungsform kann die Prozesswasserzentrifuge auf dem Kreislaufbehälter bzw. oberhalb des Kreislaufbehälters angeordnet sein und insbesondere oberhalb des Schmutzwassertanks neben dem Arbeitsbehälter positioniert sein. Eine solche Anordnung trägt zu einer kompakten Bauweise bei, da die Prozesswasserzentrifuge unmittelbar oberhalb des Schmutzwasserbehälters angeordnet ist und hierdurch nur kurze Leitungsverbindungen erforderlich sind. Zudem kann bei Stillstand der Zentrifuge eine Restentwässerung direkt in den Schmutzwassertank erfolgen.

Nach einer weiteren vorteilhaften Ausführungsform können der Arbeitsbehälter, der Kreislaufbehälter und die Prozesswasserzentrifuge sowie zumindest eine Pumpe über einen geschlossenen Pumpkreislauf miteinander verbunden sein. Mit der Pumpe kann entweder Schmutzwasser von dem Schmutzwasserbehälter in die Prozesswasserzentrifuge gepumpt werden und/oder es kann Reinwasser aus dem Reinwasserbehälter in den Arbeitsbehälter gepumpt werden. In jedem Fall ergibt sich ein geschlossener Prozesswasserkreislauf, mit dem das beim Gleitschleifen verunreinigte Prozesswasser während des Gleitschleifens kontinuierlich gereinigt werden kann.

Nach einer weiteren vorteilhaften Ausführungsform weist die Gleitschleifanlage ein quaderförmiges Gehäuse auf, wobei das Gehäuse an einer Ecke des Quaders geöffnet ist und dort einen Werkstückausgabebereich bildet, der zu zwei benachbarten Seiten des Gehäuses hin offen ist. Mit einer solchen "über Eck"-Anordnung des Werkstückausgabebereichs ergibt sich einerseits eine ergonomisch sehr günstige und andererseits eine sehr platzsparende Anordnung. Die Werkstückausgabe, die beispielsweise dadurch erfolgen kann, dass die bearbeiteten Werkstücke in einen Behälter ausgegeben werden, ist hierdurch an einer Ecke der Gleitschleifanlage vorgesehen, wodurch ein mit Werkstücken gefüllter Behälter ergonomisch besonders günstig mit beiden Händen gegriffen und entnommen werden kann, ohne dass sich eine Bedienperson besonders weit nach vorne bücken muss. Dies steht im Gegensatz zu bekannten Werkstückausgabebereichen, die ausschließlich an einer Schmal- oder Längsseite einer Gleitschleifanlage angeordnet sind.

Nach einer weiteren vorteilhaften Ausführungsform kann die Prozesswasserzentrifuge und optional auch der Arbeitsbehälter in einer Schallschutzkabine montiert sein. Hierbei ist es möglich, die Prozesswasserzentrifuge und den Arbeitsbehälter in ein und derselben Schallschutzkabine unterzubringen. Alternativ kann für jede der beiden Komponenten eine eigene Schallschutzkabine vorgesehen sein. In beiden Fällen ergibt sich nicht nur ein verbesserter Lärmschutz, sondern auch ein Schutz vor Verunreinigungen oder Verletzungen während des Betriebs. Ein Gehäuse der Anlage kann als Schallschutzkabine ausgebildet sein, wobei eine Abdichtung zum Untergrund durch kompressibles Dämmmaterial, wie beispielsweise Moosgummi erfolgen kann.

Nach einer weiteren vorteilhaften Ausführungsform kann das Grundgestell Einführöffnungen für einen Hubwagen oder Gabelstapler aufweisen. Auf diese Weise kann das Grundgestell mit den Gabeln des Hubwagens oder des Gabelstaplers angehoben und transportiert werden. Während des Betriebs steht eine solche Gleitschleifanlage allerdings fest auf dem Untergrund, so dass sich diese im Betrieb nicht ungewünscht bewegt, was bei mobilen Gleitschleifanlagen mit Rädern oder Rollen der Fall sein kann. Auch kann die die Anlage mit Koppelelementen für einen Kran versehen sein, um diese zu bewegen.

Nach einer weiteren vorteilhaften Ausführungsform kann der Arbeitsbehälter auf einer Basis befestigt sein, die mit dem Grundgestell nicht starr verbunden ist. Da bei einer Gleitschleifanlage der Arbeitsbehälter üblicherweise entweder eine Vibrationseinrichtung oder eine Rotationseinrichtung aufweist, unterliegt der Arbeitsbehälter im Betrieb stets gewissen Schwingungen. Wenn allerdings der Arbeitsbehälter zwar fest auf dem Untergrund steht, allerdings nicht mit dem Grundgestell starr verbunden ist, werden diese Schwingungen oder Vibrationen in keiner Weise auf das Grundgestell übertragen.

Nach einer weiteren vorteilhaften Ausführungsform kann der Arbeitsbehälter auf einer Basis oder einem Basisrahmen befestigt sein, die oder der von dem Grundgestell umrahmt ist. Hierdurch ist es möglich, die Basis in das Grundgestell einzusetzen, so dass die Basis und der damit verbundene Arbeitsbehälter zusammen mit dem Grundgestell transportiert werden kann. Durch eine entsprechende Überlappung zwischen Grundgestell und Basis kann dabei dafür gesorgt werden, dass bei Anheben des Grundgestells auch die Basis mit angehoben wird. Umgekehrt sind auch Ausführungsformen möglich, bei denen bei Anheben der Basis das Grundgestell mit angehoben wird.

Nach einer weiteren vorteilhaften Ausführungsform kann das Arbeitsvolumen des Arbeitsbehälters etwa 80 bis 150 l und die Leistung der Prozesswasserzentrifuge etwa 50 bis 70 l/h betragen. Mit einer derartigen Dimensionierung haben sich trotz einer sehr kompakten Bauweise gute Leistungsergebnisse gezeigt.

Nach einer weiteren vorteilhaften Ausführungsform kann der Arbeitsbehälter einen runden Querschnitt aufweisen, dessen maximaler Durchmesser zwischen 80 und 120 cm beträgt, was ebenfalls zu einer kompakten Bauweise beiträgt. Die Nutzbreite des Arbeitskanals des Arbeitsbehälters kann zwischen etwa 200 und 280 mm betragen.

Nach einer weiteren vorteilhaften Ausführungsform kann die Prozesswasserzentrifuge von der Steuerung mit einer Drehzahl von über 4000 U/min betreibbar sein bzw. betrieben werden. Eine derartig hohe Drehzahl trägt zu einem hohen Sauberkeitsgrad bei und führt zu deutlich längere Standzeiten des Wasserkreislaufs.

Nach einer weiteren vorteilhaften Ausführungsform kann auf dem Grundgestell ein Konservierungsbecken oder Spülbecken für Werkstücke vorgesehen sein, um diese nach dem Gleitschliffprozess einem Konservierungsvorgang zu unterziehen.

Nachfolgend wird die vorliegende Erfindung rein beispielhaft anhand vorteilhafter Ausführungsformen und unter Bezugnahme auf die beigefügten Zeichnungen beschrieben.

Es zeigen:
- Fig. 1: eine perspektivische Ansicht einer mobilen Gleitschleifanlage;
- Fig. 2: eine schematische Darstellung des Prozesswasserkreislaufs der Gleitschleifanlage von Fig. 1; und
- Fig. 3: eine perspektivische Ansicht einer weiteren Ausführungsform einer mobilen Gleitschleifanlage.

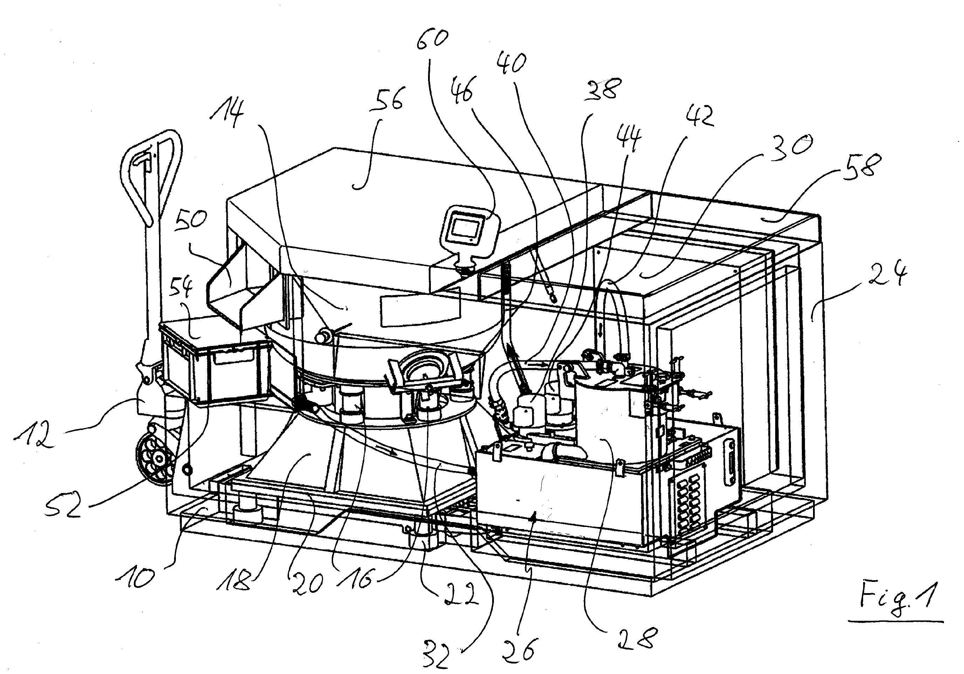

Fig. 1 zeigt eine perspektivische Ansicht einer ersten Ausführungsform einer mobilen Gleitschleifanlage, die ein Grundgestell 10 aufweist, das transportabel ist und mit Hilfe eines Hubwagens 12 oder eines Gabelstaplers oder dergleichen transportiert werden kann. Die Gleitschleifanlage weist weiterhin einen Arbeitsbehälter 14 auf, der bei dem dargestellten Ausführungsbeispiel als Rundvibrator ausgebildet ist. Der Arbeitsbehälter 14 ist über Dämpfungselemente 16 auf einer Basis 18 gelagert, die von oben in das Grundgestell 10 eingesetzt, jedoch nicht starr oder fest mit dem Grundgestell 10 verbunden ist. Eine nicht näher dargestellte Vibrationseinrichtung ist an dem Arbeitsbehälter 14 vorgesehen, um diesen auf an sich bekannte Art und Weise in Schwingungen zu versetzen. In dem Arbeitsbehälter 14 werden zum Gleitschleifen von Werkstücken Schleifkörper und Prozesswasser eingefüllt, so dass durch Betreiben der Vibrationseinrichtung die Werkstücke mittels Gleitschleifen behandelt werden.

Wie Fig. 1 verdeutlicht, weist die Basis 18 einen Grundrahmen 20 auf, der an seiner Unterseite vier gedämpfte Standfüße 22 besitzt, die den Untergrund, zum Beispiel einen Hallenboden, berühren. Hierbei überdeckt der Grundrahmen 20 die umgebende Konstruktion des Grundgestells 10, so dass bei einem Anheben des Grundgestells 10 auch der Grundrahmen 20 der Basis 18 angehoben wird. Wenn allerdings das Grundgestell 10 vollständig abgesenkt ist, steht die Basis 18 frei und entkoppelt von dem Grundgestell 10 auf dem Untergrund.

Wie Fig. 1 ferner zeigt, ist oberhalb des Grundgestells 10 ein quaderförmiges Gehäuse 24 vorgesehen, welches als Schallschutzkabine ausgebildet ist und die einzelnen Komponenten der Gleitschleifanlage umgibt. Innerhalb des Gehäuses 24 ist ein geschlossener Kreislauf für Prozesswasser vorgesehen, der neben dem Arbeitsbehälter 14 einen Kreislaufbehälter 26 für Prozesswasser, eine Prozesswasserzentrifuge 28 und eine Steuerung 30 umfasst, die in einem Schaltschrank angeordnet ist. Die Steuerung 30 ist so ausgebildet und eingerichtet, dass diese mit Hilfe von Pumpen und Ventilen sowie Sensoren im Betrieb der Gleitschleifanlage eine Zwangsreinigung des Prozesswassers im geschlossenen Kreislauf durchführt. Eine automatische Füllstandsüberwachung kann auch vorgesehen sein.

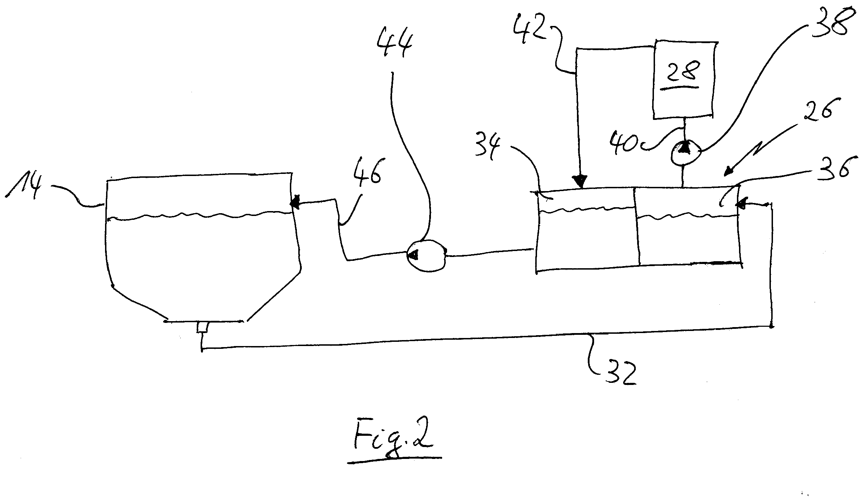

Nachfolgend wird der geschlossene Prozesswasserkreislauf unter Bezugnahme auf Fig. 1 oder Fig. 2 näher beschrieben.

Grundsätzlich befindet sich das Prozesswasser innerhalb des Arbeitsbehälters 14. Im laufenden Betrieb wird dieses aus dem Arbeitsbehälter 14 kontinuierlich abgelassen und durch eine Leitung 32 in Richtung des Kreislaufbehälters 26 geleitet. Der Kreislaufbehälter 26 ist selbst zweigeteilt ausgeführt und umfasst im Inneren einen Reinwassertank 34 sowie einen Schmutzwassertank 36. Mit Hilfe einer Schmutzwasserpumpe 38 wird das Schmutzwasser über eine Schmutzwasserleitung 40 in die Zentrifuge 28 gepumpt und dort zentrifugiert. Aus der Zentrifuge 28 austretendes Reinwasser wird im laufenden Betrieb über eine Reinwasserleitung 42 in den Reinwassertank 34 geleitet und von dort mit Hilfe einer Reinwasserpumpe 44 über eine Leitung 46 in den Arbeitsbehälter 14 zurückgepumpt. Wie somit insbesondere Fig. 2 verdeutlicht, sind der Arbeitsbehälter 16, der Kreislaufbehälter 26 und die Prozesswasserzentrifuge 28 sowie die beiden Pumpen 38 und 44 über einen geschlossenen Pumpkreislauf miteinander verbunden, der durch die Leitungen 32, 40, 42 und 46 gebildet ist, und der während des Gleitschliffprozesses kontinuierlich betrieben wird.

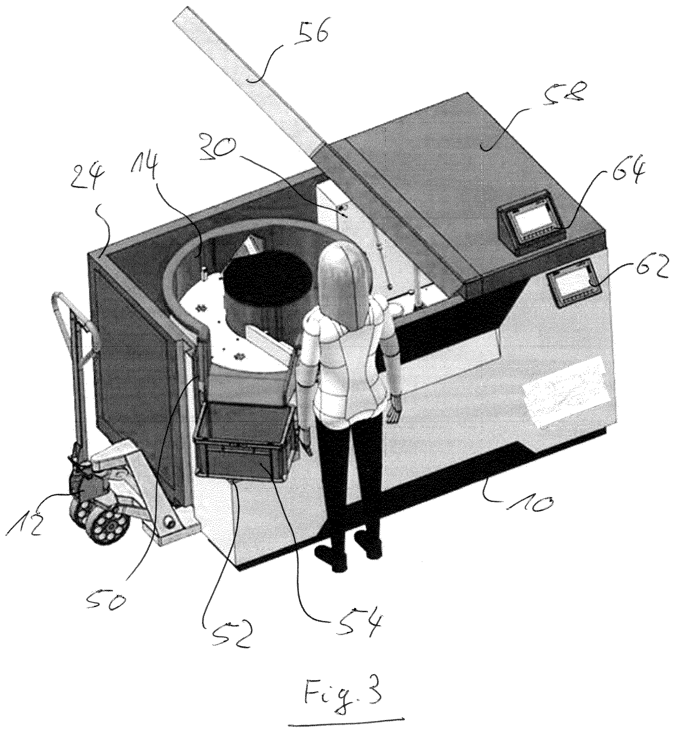

Fig. 1 zeigt weiterhin, dass der Arbeitsbehälter 14 einen grundsätzlich runden Querschnitt aufweist und an einer Stelle der Außenwand an seinem oberen Rand geöffnet ist, um einen Austritt von Werkstücken über einen Austrittsschacht 50 zu ermöglichen. Hierbei ist der Austrittsschacht 50 an einer Ecke des quaderförmigen Gehäuses 24 (vgl. hierzu auch die insoweit gleichartige Ausführungsform von Fig. 3) angeordnet. Das Gehäuse 24 bildet an dieser Stelle einen Werkstückausgabebereich mit einem Ablagetisch 52 für einen Werkstückbehälter 54, in den Werkstücke ausgegeben werden können. Der Werkstückbehälter 54 kann somit sowohl von der Schmalseite wie auch von der Längsseite wie auch über Eck auf den Ablagetisch 52 gestellt und von diesem entnommen werden.

Schließlich ist das Gehäuse 24 an seiner Oberseite oberhalb des Arbeitsbehälters 16 mit einem Deckel 56, beispielsweise einem Klappdeckel, verschließbar. Ebenso ist das Gehäuse oberhalb des Schaltschranks 30 und des Kreislaufbehälters 26 mit einem weiteren Schallschutzdeckel 58 verschlossen. Zwischen den beiden Deckeln 56 und 58 ist bei der dargestellten Ausführungsform eine Eingabe- und Kontrolleinheit 60 vorgesehen, mit der die Steuerung 30 und damit auch sämtliche Komponenten innerhalb der Gleitschleifanlage bedient und überwacht werden können. Außerdem kann das Gehäuse 24 Zugangs- und Wartungsklappen aufweisen.

Fig. 3 zeigt eine perspektivische Ansicht einer weiteren Ausführungsform einer Gleitschleifanlage, die grundsätzlich ähnlich aufgebaut ist wie die unter Bezugnahme auf die Fig. 1 und Fig. 2 beschriebene Ausführungsform, weshalb für gleiche Komponenten auch gleiche Bezugszeichen verwendet sind.

Für diese Ausführungsform sind für die Bedienung und Überwachung der Steuerung 30 eine getrennte Eingabeeinheit 62 und eine oberhalb des Deckels 58 angeordnete Anzeigeeinheit 64 vorgesehen. Gut zu erkennen ist, dass auch bei dieser Ausführungsform ein über Eck angeordneter Werkstückausgabebereich vorgesehen ist, um Werkstücke aus dem Arbeitsbehälter 14 in den Werkstückbehälter 54 auszugeben.

Mit der vorstehend beschriebenen Gleitschleifanlage ist eine emissionsfreie und abwasserfreie Behandlung von Werkstücken durch Gleitschleifen auf engstem Raum möglich. Da die Gleitschleifanlage keinen Wasserzulauf und keinen Abwasserablauf besitzt, muss diese wasserrechtlich nicht angemeldet werden. Durch die permanente Reinigung des Prozesswassers im geschlossenen Kreislauf ergibt sich langfristig eine hohe Nutzungsqualität, wobei das Prozesswasser auch durch eine automatisierte Zugabe von Abwasserreinigerkomponenten, wie beispielsweise Flockungsmitteln, konditioniert werden kann. Durch die durchgeführte Zwangsreinigung des gesamten Prozesswassers durch Zentrifugalsepariertechnik bei hohen Drehzahlen der Prozesswasserzentrifuge im Bereich von 4100 U/min kann langfristig eine sehr hohe Prozesswasserqualität sichergestellt werden. Die ganze Anlage besitzt einen guten Wirkungsgrad mit einem geringen Energiebedarf. Der Arbeitsbehälter kann einen Durchmesser von nur 1000 bis 1300 mm aufweisen, wobei der Platzbedarf für die gesamte Gleitschleifanlage beispielsweise 1800 x 1000 x 1200 mm (LxBxH) betragen kann. Bei einer etwas größeren Ausführungsvariante können die Abmessungen in der Größenordnung von 1600x1300x1300 mm liegen. Durch die vollständige Verkabelung sämtlicher elektrischer Komponenten ist für den elektrischen Anschluss lediglich ein einziger Stecker erforderlich. Ein Anschluss von Zu- oder Abwasserverbindungen ist ebenfalls nicht nötig. Auch können digitale Schnittstellen für IoT-Anwendungen und für eine Industrie 4.0-fähige Kommunikation mit Vor- und/oder Folgeanlagen und anderen Steuerungen vorhanden sein.

Vorstehend wurde bei den beschriebenen Ausführungsformen zwar ein Rundvibrator als Arbeitsbehälter beschrieben. Das erfindungsgemäße Konzept ist jedoch in gleicher Weise mit Trogvibratoren, Fliehkraftanlagen, Schlepp-, Surf- oder Tauchfinish-Anlagen durchführbar.

## Patentansprüche

1. Mobile Gleitschleifanlage, umfassend
ein transportables Grundgestell (10), mit einem Arbeitsbehälter (14), einem Kreislaufbehälter (26) für Prozesswasser, einer Prozesswasserzentrifuge und einer Steuerung (30), wobei
die Steuerung (30) ausgebildet und eingerichtet ist, im Betrieb der Gleitschleifanlage eine Zwangsreinigung des Prozesswassers im geschlossenen Kreislauf durchzuführen.

2. Gleitschleifanlage nach Anspruch 1,
**dadurch gekennzeichnet,**
**dass** der Kreislaufbehälter (26) einen Reinwassertank und einen Schmutzwassertank (36) aufweist.

3. Gleitschleifanlage nach Anspruch 1 oder 2,
**dadurch gekennzeichnet,**
**dass** die Prozesswasserzentrifuge (28) oberhalb des Kreislaufbehälters (26), insbesondere oberhalb des Schmutzwassertanks (36), und neben dem Arbeitsbehälter (16) angeordnet ist.

4. Gleitschleifanlage nach einem der vorstehenden Ansprüche,
**dadurch gekennzeichnet,**
**dass** der Arbeitsbehälter (16), der Kreislaufbehälter (26) und die Prozesswasserzentrifuge (28) und zumindest eine Pumpe (38, 44) über einen geschlossenen Pumpkreislauf (32, 40, 42, 46) miteinander verbunden sind.

5. Gleitschleifanlage nach einem der vorstehenden Ansprüche,
**dadurch gekennzeichnet,**
**dass** diese ein quaderförmiges Gehäuse (24) aufweist, das an einer Ecke des Quaders geöffnet ist und dort einen ein Werkstückausgabebereich bildet, der zu zwei benachbarten Seiten des Gehäuses (24) hin offen ist.

6. Gleitschleifanlage nach einem der vorstehenden Ansprüche,
**dadurch gekennzeichnet,**
**dass** die Prozesswasserzentrifuge (28) und optional auch der Arbeitsbehälter (16) in einer Schallschutzkabine montiert ist, die insbesondere durch ein Gehäuse (24) der Gleitschleifanlage gebildet ist.

7. Gleitschleifanlage nach einem der vorstehenden Ansprüche,
**dadurch gekennzeichnet,**
**dass** das Grundgestell (10) Einführöffnungen für einen Hubwagen (12) oder Gabelstapler aufweist.

8. Gleitschleifanlage nach einem der vorstehenden Ansprüche,
**dadurch gekennzeichnet,**
**dass** der Arbeitsbehälter (16) auf einer Basis (18, 20) befestigt ist, die mit dem Grundgestell (10) nicht starr verbunden ist.

9. Gleitschleifanlage nach einem der vorstehenden Ansprüche,
**dadurch gekennzeichnet,**
**dass** der Arbeitsbehälter (16) auf einer Basis (18, 20) befestigt ist, die von dem Grundgestell (10) umrahmt ist.

10. Gleitschleifanlage nach einem der vorstehenden Ansprüche,
**dadurch gekennzeichnet,**
**dass** das Arbeitsvolumen des Arbeitsbehälters (16) etwa 80 - 120 l und die Leistung der Prozesswasserzentrifuge (28) etwa 50 - 70 l/h beträgt.

11. Gleitschleifanlage nach einem der vorstehenden Ansprüche,
**dadurch gekennzeichnet,**
**dass** der Arbeitsbehälter (16) einen runden Querschnitt aufweist, dessen maximaler Durchmesser zwischen 80 und 110 cm beträgt.

12. Gleitschleifanlage nach einem der vorstehenden Ansprüche,
**dadurch gekennzeichnet,**
**dass** die Prozesswasserzentrifuge (28) im laufenden Betrieb von der Steuerung (30) mit einer Drehzahl von über 4000 U/min betreibbar ist.

13. Gleitschleifanlage nach einem der vorstehenden Ansprüche,
**dadurch gekennzeichnet,**
**dass** auf dem Grundgestell (10) ein Konservierungs- oder Reinigungsbecken für Werkstücke vorgesehen ist.
